# EUROPEAN PATENT APPLICATION

(11) **EP 3 786 016 A1**
(43) Date of publication of application: **03.03.2021**
(21) Application number: 20193044.3
(22) Date of filing: 27.08.2020
(51) Int. Cl.: B60W 20/40, B60W 20/13, B60W 20/16, B60K 6/48, B60K 6/46, B60W 20/12, B60W 50/00

(54) **VEHICLE CONTROL APPARATUS**

(30) Priority: 02.09.2019 JP 2019159685
(71) Applicant: Honda Motor Co., Ltd., Tokyo 107-8556 (JP)
(72) Inventor: Hashizume, Takashi, Saitama, 351-0193 (JP); Kimata, Ryuichi, Tokyo, 107-8556 (JP)
(74) Representative: Beder, Jens

(57) **Abstract**

A vehicle control apparatus (201) is provided. The apparatus comprises a generator (205) that generates electricity using an engine (203) as a motive power source, a battery (209) that stores electricity that has been generated by the generator (205), a drive unit (211, 213R, 213L, 215R, 215L) that drives a vehicle with a motor (215R, 215L) that uses the battery as an electric power source, and a control unit (201), wherein the control unit stops the engine when the vehicle is inside a predetermined engine operation prohibition area and when a remaining level of the battery is equal to or higher than a first threshold, and the engine is started when the remaining level of the battery is lower than a second threshold.

## Description

### BACKGROUND OF THE INVENTION

### Field of the Invention

The present invention relates to a vehicle control apparatus for controlling, for example, a vehicle that travels autonomously.

### Description of the Related Art

There are hybrid vehicles that use an internal combustion engine and an electric motor as motive power sources. A hybrid vehicle can travel by generating electricity using an internal combustion engine, and by driving an electric motor using this electricity. The electricity for driving the electric motor is first stored into a battery, and then supplied to the electric motor (see, for example, Japanese Patent Laid-Open No. 2000-355402). In Japanese Patent Laid-Open No. 2000-355402, it is further mentioned that only a motor is driven when an unmanned transport device is inside a building, and an engine is driven as well outside a building.

However, there may be an environment in which it is not desirable to operate the engine even outside a building, and if the remaining level of a battery has reached zero, it is not possible to continue travelling using the electric motor unless electricity is generated by driving the engine.

### SUMMARY OF THE INVENTION

The present invention provides a vehicle control apparatus that can control the operation of a hybrid vehicle in accordance with an environment.

The present invention includes the following configuration. The present invention in its first aspect provides a vehicle control apparatus as specified in claims 1 to 8.

According to the present invention, the operation of a hybrid vehicle can be controlled in accordance with an environment.

Further features of the present invention will become apparent from the following description of exemplary embodiments with reference to the attached drawings.

### BRIEF DESCRIPTION OF THE DRAWINGS

FIG. 1A and FIG. 1B are external views of a hybrid vehicle according to an embodiment as viewed from the side.
FIG. 2 is a block diagram showing a control configuration of the hybrid vehicle according to the embodiment.
FIG. 3A and FIG. 3B are diagrams showing schematic examples of a procedure of autonomous travelling of the hybrid vehicle and map information according to the embodiment.
FIG. 4 is a flowchart showing exemplary control on an internal combustion engine of the hybrid vehicle according to the embodiment.
FIG. 5 is a flowchart showing exemplary control on an internal combustion engine of a hybrid vehicle according to a second embodiment.

### DESCRIPTION OF THE EMBODIMENTS

Hereinafter, embodiments will be described in detail with reference to the attached drawings. Note that the following embodiments are not intended to limit the scope of the claimed invention, and limitation is not made an invention that requires all combinations of features described in the embodiments. Two or more of the multiple features described in the embodiments may be combined as appropriate. Furthermore, the same reference numerals are given to the same or similar configurations, and redundant description thereof is omitted.

### [First Embodiment]

### • Configuration of Vehicle

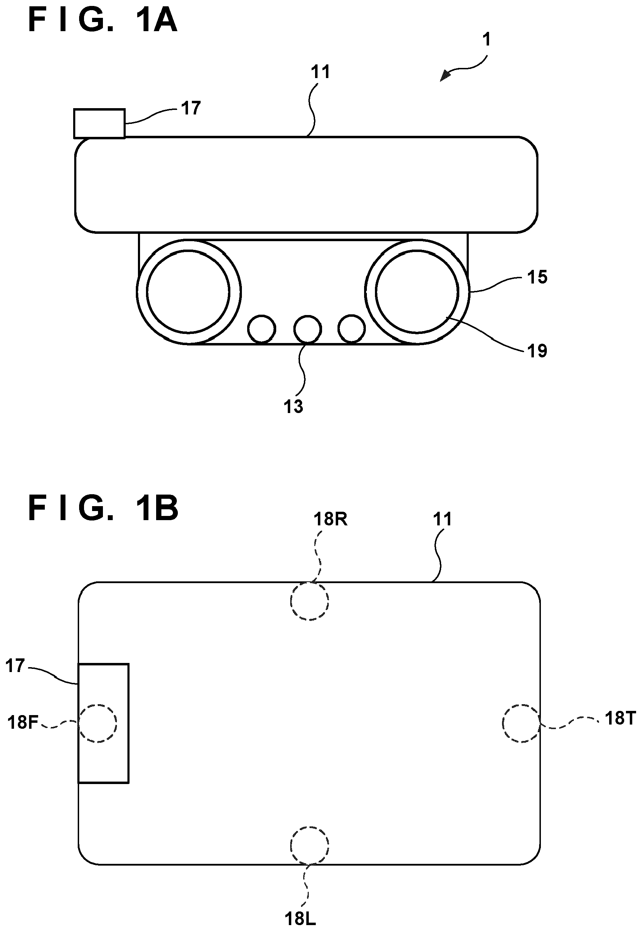

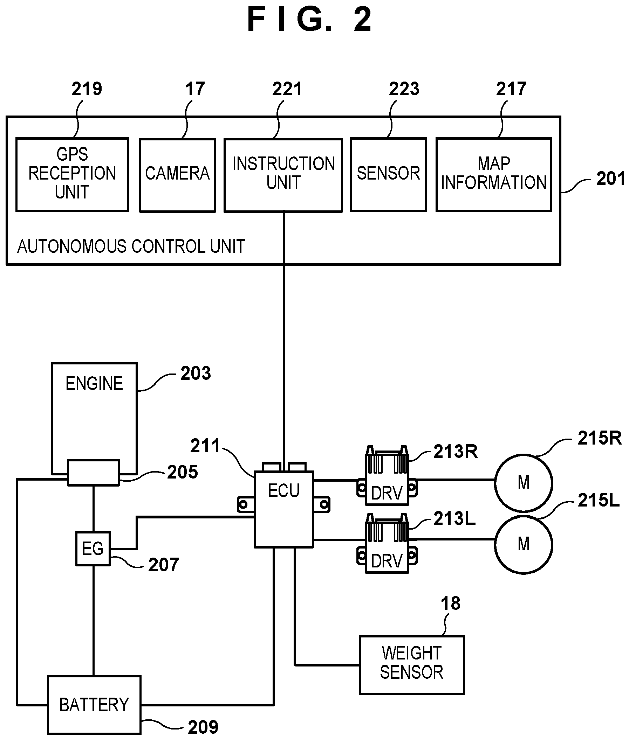

FIG. 1A and FIG. 1B are respectively a side view and a top view of an autonomously-travelling vehicle 1 (hereinafter may be referred to simply as a vehicle 1) according to the present embodiment. The vehicle 1 according to the present embodiment is a tracked vehicle including a main body 11, which has a control unit, a motive power source, and the like built therein, and a crawler 15. The crawler 15 is composed of sprocket wheels 19 that are driven by the motive power source, a crawler belt 13 that is driven by the sprocket wheels 19, and so forth. Furthermore, the main body 11 includes a camera 17 that shoots a certain range centered at the direction of movement, and shot images are used in travel control. That is to say, the camera 17 functions as an external information obtainment unit that obtains information of the outside of the vehicle 1. A control system and a drive system shown in FIG. 2 are housed in the main body 11. The vehicle 1 is a hybrid vehicle that uses a combination of an engine, which is an internal combustion engine, and electric motors as its drive system, generates electricity using the engine, and drives the electric motors using this electricity. In the present example, the vehicle 1 is structured in such a manner that it can travel autonomously in an unmanned state, and freight can be loaded on its upper part. Therefore, members for fixing the loaded freight (load) in place, a fall-prevention cage, and the like may be provided; these, however, are omitted in FIG. 1A and FIG. 1B.

Furthermore, a board for the purpose of loading is provided on a top surface, and four weight sensors 18R, 18L, 18F, 18T (may be collectively referred to as weight sensors 18) are provided therebelow. Based on the direction of movement, the weight sensors 18R, 18L are respectively provided on the right and left of a central portion in the front-and-rear direction, whereas the weight sensors 18F, 18T are respectively provided on the front and rear of a central portion in the left-and-right direction. Therefore, the weight sensors 18 can not only detect a total weight of the loaded freight, but also detect weight balance in the front-and-rear direction and the left-and-right direction. Balance in the front-and-rear direction is indicated by the difference between weights that were respectively detected by the weight sensors 18F, 18T, whereas balance in the left-and-right direction is indicated by the difference between weights that were respectively detected by the weight sensors 18L, 18R.

FIG. 2 is a block diagram of the vehicle 1. Autonomous travelling is realized by an autonomous control unit 201 controlling the drive system. First, the drive system will be described. An engine 203 is an internal combustion engine that generates electricity by driving a generator 205. Note that the generator 205 also functions as a starter motor for the engine 203. The engine rotation is controlled by an electronic governor 207 under control of an ECU 211. A battery (secondary battery) 209 is charged with the electricity generated by the generator 205. The electricity stored in the battery 209 is supplied to each of motors 215R, 215L via drivers 213R, 213L. The motors 215R, 215L respectively drive the right and left sprocket wheels 19. The drivers 213R, 213L control electric current supplied to the corresponding motors 215R, 215L. When the motors 215R, 215L are, for example, three-phase induction motors, the drivers 213R, 213L may include an inverter that converts direct current from the battery into alternating current. Accordingly, the rotation speed and torque of each sprocket wheel 19 may be controlled by changing the voltage and frequency of alternating current in accordance with control performed by the ECU 211.

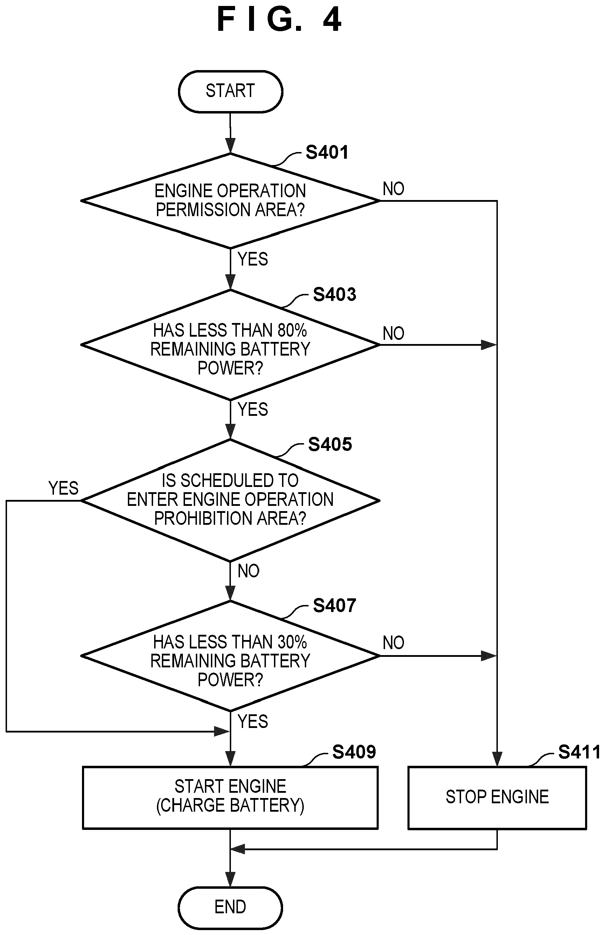

The left and right motors and drivers are independent of one another, and can drive the left and right sprocket wheels 19 independently of each other. It goes without saying that, even when other types of motors are used, the torque and speed thereof can be controlled by adopting drivers that are appropriate therefor. The vehicle 1 turns left or right due to the rotation difference between the left and right motors 215R, 215L; thus, the ECU 211 controls the motors 215R, 215L in accordance with control performed by the autonomous control unit 201, and achieves the speed and steering corresponding to an instruction. The ECU 211 also generates electricity as necessarily by controlling the state of operation (e.g., stopping and starting) of the engine 203. Note that in the present embodiment, it is assumed that charging of the battery is controlled by the ECU 211. Although there is one ECU 211 in FIG. 2, it is permissible to adopt a configuration in which a plurality of independent ECUs are provided in accordance with objects to be controlled, and these are coordinated by one ECU. To this end, the ECU 211 can execute, for instance, a program having a procedure that is exemplarily shown in FIG. 4. Furthermore, the four weight sensors 18 shown in FIG. 1B (collectively shown in FIG. 2) are connected to the ECU 211, and the detected weights are input to the ECU 211.

Next, the autonomous control unit 201 will be described. A GPS reception unit 219 is one example of a position detection device that receives signals from a GPS satellite and inputs them to the ECU 211. Alternatively, the GPS reception unit 219 may specify the current position, and input the specified current position to the ECU 211. A camera 17, which is the same as the camera 17 of FIG. 1A and FIG. 1B, shoots images in the direction of movement (also called the front), and monitors obstacles, signs, and so forth. When the camera 17 is a stereo camera, the distance to a target can be estimated based on parallax. This makes it possible to estimate an inclination, especially an uphill inclination, in the direction of movement. In addition, cameras for monitoring the rear and the sides may be further provided. Sensors 223 may include various types of sensors, and these sensors may include, for example, sensors that are necessary for control, such as an azimuth sensor, an inclination sensor, an acceleration rate sensor, and so forth. It goes without saying that not only the sensors that have been exemplarily described, but also necessary sensors can be included.

Map information 217 is, for example, map information that is stored in a nonvolatile memory, such as a rewritable ROM and a hard disk, and covers a region in which the vehicle 1 is used, and may include information related to paths and facilities along which the vehicle 1 travels, obstacles, sections of the region, and so forth. The sections of the region include an engine operation prohibition area and an engine operation permission area, which will be described later. It is permissible to set only an engine operation prohibition area and regard other areas as engine operation permission areas; conversely, it is permissible to set only an engine operation permission area and regard other areas as engine operation prohibition areas. Furthermore, the map information may include the gradient (inclination) of a path. The gradient may indicate a direction; however, in the present example, it is assumed that only the value of the inclination is included, and the direction of the inclination may not be included. Note that engine operation refers to the act of putting the engine 203, which is the internal combustion engine, in motion, and an engine operation prohibition area refers to an area in which the engine 203 must not be operated. Once a destination has been set via, for example, an operation unit and a communication unit, which are not shown, the autonomous control unit 201 determines a path from the current location to the destination based on the map information 217, and controls a drive unit so as to travel along this path.

An instruction unit 221 determines a speed and a steering angle based on, for example, the current position obtained from the GPS reception device 219, the status of the surroundings of the vehicle 1 that has been obtained using the camera 17, various types of sensors 223, and the like, a travel path that has been determined, and the map information 217, and inputs an instruction signal to the ECU 211 of the drive system. Upon accepting the instruction signal, the ECU 211 controls the motors 215R, 215L to achieve the speed and the steering angle of the instruction.

### • Outline of Autonomous Travelling

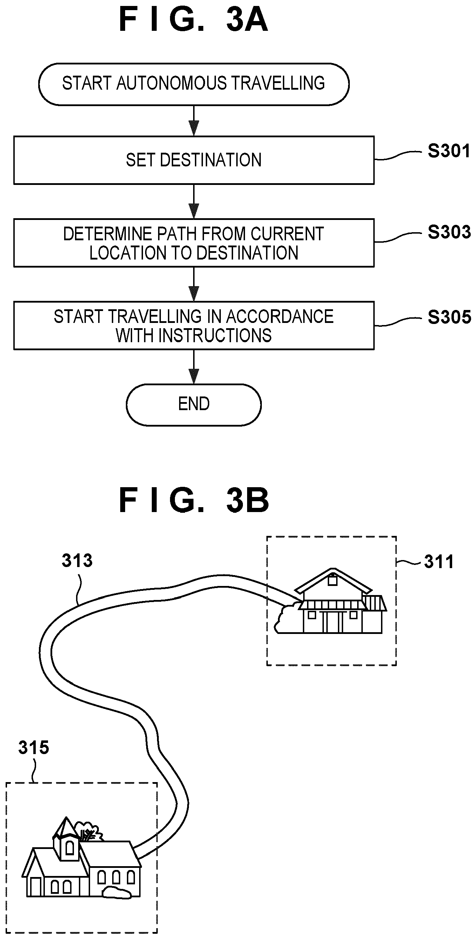

FIG. 3A shows an outline of a procedure at the time of autonomous travelling of the vehicle 1. This procedure is executed by the autonomous control unit 201, especially the instruction unit 221. First, the setting of a destination that has been made by an operator via the operation unit 201 is accepted (step S301). The setting of the destination may be made by, for example, displaying a map of the vicinity of the current location, and causing the destination to be designated on the map or to be designated using coordinates, houses that are displayed, and the like. The instruction unit 221 determines the current location from GPS signals received by the GPS reception unit 219, and determines a path from the current location to the destination (step S303). As the path, for example, a path along a road (or an aisle) may be determined. Also, a path corresponding to the designated destination may be determined from among paths that have been defined in advance for respective destinations. Then, in response to an instruction to start travelling, an instruction signal is input to the ECU 211 so as to drive the motors 215R, 215L, and travelling along the determined path is started (step S305). During travel, the GPS reception unit 219 obtains position information of the current location (the current position), and the direction of movement is controlled so as to travel along the determined path. Furthermore, the camera 17 monitors the surroundings centered at the direction of movement; if an obstacle is discovered, control is performed so as to avoid the obstacle, stop, or decelerate.

FIG. 3B shows an example of a path that has been determined based on the map information 217. A destination 311 is the destination that was set in step S301. A current location 315 is the current location that was obtained in step S303, and a path 313 is the path that connects the current location 315 and the destination 311 in the map information 217. In determining the path, it is sufficient to select, for example, the shortest path among the roads (or aisles) that connect the current location and the destination, or a path that has been determined in advance in correspondence with the destination. Here, dash-line frames that respectively enclose the current location 315 and the destination 311 in FIG. 3B indicate engine operation prohibition areas that have been defined in advance in the map information 217. Areas other than the engine operation prohibition areas are engine operation permission areas here. An engine operation prohibition area may be specified in the form of a rectangular region as shown in the figure, but may also be specified using other methods. For example, it may be indicated by a circular region specified by a central point and a radius, or indicated by an outline vector that encloses a closed region.

For example, when an engine operation prohibition area is a rectangular region (that is assumed to have sides along the coordinate axes), whether the current location is inside the engine operation prohibition area can be determined by determining whether the values of x- and y-coordinates of the current location are included among the values indicating the sides of the rectangular region in the respective directions. When an engine operation prohibition area is a circular region, whether the current location is inside the engine operation prohibition area can be determined by determining whether the distance from the center of the circular region to the current location is equal to or smaller than the radius of the circular region. When an engine operation prohibition area is a closed region based on an outline vector, an intersection(s) between a line that connects a sufficiently distant position located outside the closed region and the current location and the outline vector of the closed region is obtained, and the current location can be determined to be inside the closed region, that is to say, inside the engine operation prohibition area if the number of the intersections is an odd number. In any case, it is desirable to perform area specification using a method that makes it easy to determine whether the current location is included in an engine operation prohibition (or permission) area.

### • Control on Driving of Engine

FIG. 4 shows a procedure for controlling the engine 203 according to the present embodiment, which is executed by the ECU 211. This procedure is executed periodically, for example, every 10 milliseconds, while the vehicle 1 is travelling. First, whether a current position is inside an engine operation permission area is determined (step S403). This determination may be a determination of whether the current position is outside an engine operation prohibition area. The method of determination is as described in the foregoing example.

When it is determined that the current position is outside the engine operation permission area (inside the engine operation prohibition area), the engine 203 is stopped (step S411). When in the stopped state already, this state is maintained. On the other hand, when it is determined that the current position is inside the engine operation permission area (outside the engine operation prohibition area), whether the remaining level of the battery is lower than a first threshold (in the present example, 80 percent) is determined (step S403). When the remaining level is equal to or higher than 80 percent, processing branches off to step S411, and the engine is stopped.

When it is determined that the remaining battery level is lower than 80 percent, whether entrance to an engine operation prohibition area is scheduled is determined (step S405). A case where entrance to the engine operation prohibition area is scheduled may include, for example, a case where the set destination is the engine operation prohibition area, and a case where the engine operation prohibition area exists in the direction of movement on a travel path. Alternatively, it may be a case where, with the addition of time and distance requirements, it is predicted that the engine operation prohibition area will be reached within a predetermined period based on the current speed and the distance to the engine operation prohibition area. Alternatively, it may be a case where the engine operation prohibition area exists at a distance closer than a predetermined distance in the direction of movement. That is to say, it is permissible to determine that entrance to the engine operation prohibition area is scheduled when the determined path transits or leads to the engine operation prohibition area specified in the map information 217, and furthermore, it is permissible to use an additional condition that a predicted period until the transit is equal to or shorter than a predetermined period or the distance is within the predetermined distance. In any case, the determination in step S405 is based on an instruction from the autonomous control unit 201. That is to say, when the autonomous control unit 201 determines that entrance to the engine operation prohibition area is scheduled, a signal to that effect is input to the ECU 211. In step S405, the ECU 211 makes the determination based on this signal.

When it is determined that entrance to the engine operation prohibition area is scheduled, the engine is started, and the battery is charged (step S409). When the engine is already in the operated state, it is sufficient to maintain this state. On the other hand, when it is determined that such entrance is not scheduled, whether the remaining level of the battery is lower than a second threshold (in the present example, 30 percent) is determined (step S407). When the remaining level of the battery is equal to or higher than 30 percent, the engine is stopped in step S411; when the remaining level is lower than 30 percent, the engine is started in step S409.

With the foregoing configuration and control, the vehicle 1 of the present embodiment stops the engine and travels using the electric motors in an engine operation prohibition area. Also, even in an engine operation permission area, the engine is stopped when the remaining battery level is equal to or higher than the first threshold. Furthermore, as a general rule, the engine is stopped when the remaining battery level is equal to or higher than the second threshold; however, when entrance to an engine operation prohibition area is scheduled, the engine is started regardless of the remaining battery level. As a result, the remaining battery level necessary for travel can be secured inside an engine operation prohibition area. In this way, the operation of a hybrid vehicle can be controlled in accordance with a travel environment.

### [Second Embodiment]

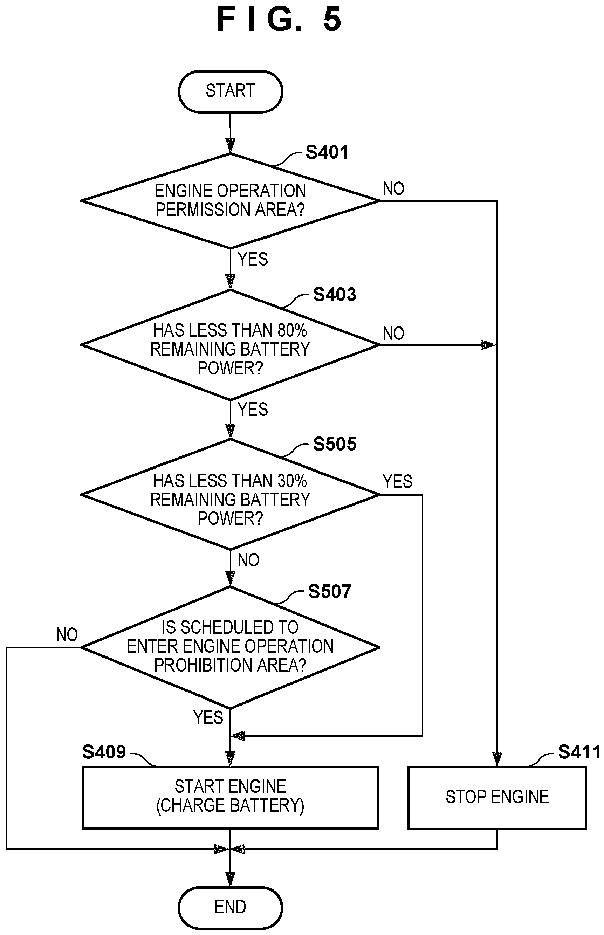

A vehicle according to the second embodiment is the same as that of the first embodiment in relation to FIG. 1A to FIG. 3B. However, the procedure for controlling driving of the engine shown in FIG. 4 is replaced with a procedure shown in FIG. 5.

In FIG. 5, steps S401 and S403 are similar to those of FIG. 4. Steps S505 and S507 are respectively equivalent to steps S407 and S405 of FIG. 4, but their order and branch destinations differ. When it is determined that the remaining battery level is lower than the first threshold in step S403, processing branches off to step S505. In step S505, whether the remaining battery level is lower than the second threshold is determined. When the remaining battery level is lower than the second threshold, the engine is started (step S409). On the other hand, when the remaining battery level is equal to or higher than the second threshold, whether entrance to an engine operation prohibition area is scheduled is determined (step S507). When entrance to the engine operation prohibition area is scheduled, the engine is started (step S409). On the other hand, when entrance to the engine operation prohibition area is not scheduled, processing is ended, and the state of the engine is maintained as is. That is to say, when the engine is driven, the driven state is maintained, whereas when the engine is stopped, the stopped state is maintained.

With this control, the engine is stopped inside an engine operation prohibition area. On the other hand, inside an engine operation permission area, the engine is stopped when the remaining battery level is equal to or higher than the first threshold, and the engine is driven when the remaining battery level is lower than the second threshold. In a case where the remaining battery level is lower than the first threshold and is equal to or higher than the second threshold, the engine is driven when entrance to an engine operation prohibition area is scheduled, but the state of the engine is maintained without being changed when such entrance is not scheduled. That is to say, when entrance to the engine operation prohibition area is not scheduled, charging is started when the remaining level of the battery has become lower than the second threshold, and charging is stopped when the remaining level has become equal to or higher than the first threshold. By performing control in the foregoing manner, the engine and the battery can be used more efficiently. Especially, the frequency of charging of the battery can be reduced. Furthermore, as the minimum remaining battery level is approximately the second threshold (in the present example, 30 percent), the remaining battery level that is sufficient for driving with the motors can be secured even if the engine is stopped in an engine operation prohibition area. In this way, the operation of a hybrid vehicle can be controlled in accordance with a travel environment.

Note that if the second threshold is sufficient as the remaining battery level, step S507 may be omitted. In this case, when it is determined that the remaining level is equal to or higher than the second threshold in step S505, it is sufficient to end processing at that point.

### [Modification Examples]

A description is now given of several modification examples that are common to the first and second embodiments.
(1) The vehicle 1 may be a wheeled vehicle that uses normal wheels as driving wheels and steered wheels, in which case there may be one electric motor for driving purpose. Instead, the vehicle 1 includes a steering mechanism for steering the steered wheels left and right. Furthermore, in place of freight or in addition to freight, a passenger may be able to board the vehicle 1.
(2) While it is assumed that the vehicle 1 can travel autonomously based on information of the map and the surroundings, a path that can be travelled may be determined in advance. For example, magnetic markers may be installed along a travel path, and the vehicle 1 may be a vehicle that travels along the path by detecting these markers. In this case, an engine operation prohibition/permission area can be specified as a two-dimensional section along this path. This can simplify a configuration necessary for autonomous driving.
(3) Although an engine operation prohibition/permission area is specified based on position information, it may be specified based on signs. For example, before the vehicle 1 takes off, whether the current location is an engine operation prohibition area or an engine operation permission area is set on the vehicle 1. Thereafter, a sign indicating an engine operation prohibition area and a sign indicating an engine operation permission area are detected from images that have been shot by the vehicle 1 using the camera 17. Then, when one of the signs has been detected, control is performed under the assumption that, from the location at which this sign was detected until the other sign is detected, the vehicle 1 is in the area indicated by the sign that was detected first. However, because signs provided on a path alone do not indicate whether entrance to an engine operation prohibition area is scheduled, signs may be provided in the map information 217. For example, when the destination is inside a building, a sign indicating an engine operation prohibition area is provided at the entrance thereof, and a sign indicating an engine operation permission area is provided at the exit of the building. Also, corresponding signs are recorded at corresponding positions in the map information 217. In this way, control can be performed so that the engine is not operated inside an engine operation prohibition area, such as a building. Furthermore, when entrance to a building is scheduled, the battery can be charged in advance. Note that signs may not be visual objects that are recognized by the camera 17; for example, magnetic markers may be embedded, and they may be regarded as signs when magnetically detected. In this way, engine operation prohibition areas can be set and changed more easily. Especially, if the registration of engine operation prohibition areas with the map information 217 is omitted, the engine operation prohibition areas can be set and changed only by installing and moving signs.
(4) When the engine has been started as a result of determining that entrance to an engine operation prohibition area is scheduled in step S405 of FIG. 4 or step S507 of FIG. 5, control may be performed so as not to enter the engine operation prohibition area until the remaining battery level becomes equal to or higher than a predetermined value. For example, when the engine has been started, the vehicle 1 is stopped on the spot (or after evacuating to a safe place); the vehicle 1 stays there until the remaining battery level reaches the predetermined value, and resumes travelling when the remaining battery level has reached the predetermined value. This predetermined value may be a third threshold between the first threshold and the second threshold. This can reliably prevent the engine from being stopped after entering an engine operation prohibition area in an insufficiently charged state.
(5) A hybrid system of the embodiments is a so-called series hybrid type in which the battery is charged by the engine for charging purpose and the electric motors are driven by the battery. In contrast, the invention pertaining to the present embodiments is also applicable to a hybrid system in which the engine can be used also for travelling purpose. The difference from the embodiments is that, while travelling in a state where the engine has been started, the engine may be used not only for charging purpose but also for travelling purpose, as opposed to the embodiments in which the engine is used exclusively for charging purpose.

### • Summary of Embodiments

The above-described present embodiments are summarized as follows.
(1) According to a first mode of the present invention, provided is a vehicle control apparatus including: a generator that generates electricity using an engine as a motive power source; a battery that stores electricity that has been generated by the generator; a drive unit that drives a vehicle with a motor that uses the battery as an electric power source; and a control unit that controls charging of the battery, wherein the control unit stops the engine when the vehicle is inside a predetermined engine operation prohibition area and when a remaining level of the battery is equal to or higher than a first threshold, and the engine is started when the remaining level of the battery is lower than a second threshold.
   In this way, the engine is stopped in the engine operation prohibition area, and charging is performed when the remaining battery level has become lower than a predetermined level; as a result, the remaining battery level can be secured in the engine operation prohibition area, and the operation of a hybrid vehicle can be controlled in accordance with an environment.
(2) According to a second mode of the present invention, provided is the vehicle control apparatus according to (1), wherein the control unit further starts the engine also when the vehicle is scheduled to enter a predetermined engine operation prohibition area.
   In this way, the remaining battery level can be secured more reliably in the engine operation prohibition area.
(3) According to a third mode of the present invention, provided is the vehicle control apparatus according to (1) or (2), wherein the control unit does not change a state of operation of the engine when the remaining level of the battery is lower than the first threshold and is equal to or higher than the second threshold.
   In this way, the frequency of charging of the battery can be reduced, and draining of the battery can be prevented.
(4) According to a fourth mode of the present invention, provided is the vehicle control apparatus according to any one of (1) to (3), further including: a position detection unit that obtains position information of a current location of the vehicle; and a storage unit that stores map information, wherein the control unit further controls autonomous travelling of the vehicle based on the position information of the current location and the map information, and the engine operation prohibition area is specified based on a definition in the map information.
   In this way, as the engine operation prohibition area is defined in the map information, the engine can be stopped based on specification of the engine operation prohibition area during autonomous driving, and the engine operation prohibition area can be set by performing an operation with respect to the map information.
(5) According to a fifth mode of the present invention, provided is the vehicle control apparatus according to any one of (1) to (3), further including: a position detection unit that obtains position information of a current location of the vehicle; a storage unit that stores map information; and an external information obtainment unit that obtains information of an outside of the vehicle, wherein the control unit further controls autonomous travelling of the vehicle based on the position information of the current location and the map information, and the engine operation prohibition area is specified based on the information obtained by the external information obtainment unit.
   In this way, as the engine operation prohibition area is presented as external information, the engine can be stopped based on specification of the engine operation prohibition area during autonomous driving, and the engine operation prohibition area can be easily set.
(6) According to a sixth mode of the present invention, provided is the vehicle control apparatus according to any one of (1) to (5), wherein when entrance to the engine operation prohibition area is scheduled, the control unit charges the battery without driving the motor.
   In this way, a sufficient remaining battery level can be secured before entering the engine operation prohibition area.
(7) According to a seventh mode of the present invention, provided is the vehicle control apparatus according to any one of (1) to (6), wherein the engine generates electricity exclusively.
   This can realize stopping of the engine in the engine operation prohibition area on a vehicle of a so-called series hybrid type.
(8) According to an eighth mode of the present invention, provided is the vehicle control apparatus according to any one of (1) to (6), wherein the engine also drives the vehicle.

This can realize stopping of the engine in the engine operation prohibition area on a vehicle of a so-called parallel hybrid type.

The invention is not limited to the foregoing embodiments, and various variations/changes are possible within the spirit of the invention.

## Claims

1. A vehicle control apparatus (201) comprising:
a generator (205) that generates electricity using an engine (203) as a motive power source;
a battery (209) that stores electricity that has been generated by the generator;
drive means (211, 213R, 213L, 215R, 215L) for driving a vehicle with a motor that uses the battery as an electric power source; and
a control unit, wherein
the control unit stops the engine when the vehicle is inside a predetermined engine operation prohibition area and when a remaining level of the battery is equal to or higher than a first threshold, and
the engine is started when the remaining level of the battery is lower than a second threshold.

2. The vehicle control apparatus according to claim 1, wherein
the control unit further starts the engine also when the vehicle is scheduled to enter a predetermined engine operation prohibition area.

3. The vehicle control apparatus according to claim 1 or 2, wherein
the control unit does not change a state of operation of the engine when the remaining level of the battery is lower than the first threshold and is equal to or higher than the second threshold.

4. The vehicle control apparatus according to any one of claims 1 to 3, further comprising:
a position detection unit (219) that obtains position information of a current location of the vehicle; and
a storage unit that stores map information (217), wherein
the control unit further controls autonomous travelling of the vehicle based on the position information of the current location and the map information, and
the engine operation prohibition area is specified based on a definition in the map information.

5. The vehicle control apparatus according to any one of claims 1 to 3, further comprising:
a position detection unit (219) that obtains position information of a current location of the vehicle;
a storage unit that stores map information (217); and
an external information obtainment unit (17, 223) that obtains information of an outside of the vehicle, wherein
the control unit further controls autonomous travelling of the vehicle based on the position information of the current location and the map information, and
the engine operation prohibition area is specified based on the information obtained by the external information obtainment unit.

6. The vehicle control apparatus according to any one of claims 1 to 5, wherein
when entrance to the engine operation prohibition area is scheduled, the control unit charges the battery without driving the motor.

7. The vehicle control apparatus according to any one of claims 1 to 6, wherein
the engine generates electricity exclusively.

8. The vehicle control apparatus according to any one of claims 1 to 6, wherein
the engine also drives the vehicle.
